Europäisches Patentamt

European Patent Office

Office européen des brevets

(11) Publication number: **0 229 700**
**A2**

## EUROPEAN PATENT APPLICATION

(21) Application number: 87300199.4

(22) Date of filing: 09.01.87

(51) Int. Cl.³: **G 06 F 13/42**

(30) Priority: 10.01.86 US 818190

(43) Date of publication of application:
22.07.87 Bulletin 87/30

(84) Designated Contracting States:
DE FR GB IT NL SE

(71) Applicant: WYSE TECHNOLOGY
3571 N. First Street
San Jose California 95134(US)

(72) Inventor: Martin, Kevin
1758 Aprilsong Court
San Jose California 95131(US)

(72) Inventor: Roybal,Ronald J.
78 Rooster Court
San Jose California 95136(US)

(74) Representative: Ayers, Martyn Lewis Stanley et al,
J.A. KEMP & CO. 14 South Square Gray's Inn
London, WC1R 5EU(GB)

(54) Virtual peripheral controller.

(57) A virtual controller for achieving compatibility between otherwise incompatible subsystems of an electronics system, such as a host processor and a peripheral, is disclosed. The virtual controller includes storage means for receiving from the processor information concerning the expected operation of the peripheral, and microprocessor means for selectively manipulating at least a portion of the information to convert it to a form usable by the peripheral. The controller also includes means for supplying back to the host appropriately modified information reflecting the operation of the peripheral.

FIG. 1

## VIRTUAL PERIPHERAL CONTROLLER

The present invention relates to communications between subsystems in electronic systems, and particularly to communications between a computer and a computer peripheral.

Computer systems typically comprise a CPU, memory, and one or more input/output devices or subsystems such as a keyboard and a video or other display, printers, disk drives, or other peripherals. For the system to operate effectively, each subsystem must communicate with the other subsystems, either directly or through another portion of the system such as the CPU. Subsystems which can communicate with one another are usually termed compatible.

To achieve compatibility with a host microcomputer such as the IBM PC, the peripheral must recognize certain signals sent by the host to the peripheral, and must send back appropriate responses. If an appropriate response is not transmitted to the host from the peripheral, the host typically will stop processing.

Compatibility between computer subsystems can be either software compatibility, hardware compatibility, or both. In most instances, hardware compatibility is required for peripherals designed to plug into the IBM PC expansion slots, and means simply that the electrical connections between the expansion slot and the peripheral will perform at least limited functionality of the peripheral and will not create a processing error for the host.  Hardware compatibility does not necessarily imply software compatibility; the converse is also true.  Software compatibility means that software which runs in the host will also work with the peripheral.  Ideally, peripherals for the IBM PC should offer both hardware and software compatibility.

In the past, achieving compatibility between subsystems usually has meant direct use of the signals provided by the CPU.  This requires that the peripheral designer adopt the conventions used by the CPU designer in developing compatible peripheral subsystems for an existing CPU.  Unfortunately, adopting the CPU designer's conventions usually also means accepting the limitations of those conventions.

Thus, in designing a product to work with the IBM Personal Computer, the developer of a peripheral in the aftermarket heretofore has been required to choose between making a compatible peripheral, in which case he must accept the many limitations of the design of the IBM PC, and making an incompatible peripheral which may run limited amounts of IBM compatible software or requires complicated additional products to achieve acceptable performance.

For example, manufacturers of high resolution graphics systems for the IBM PC heretofore have been required to forego compatibility with major amounts of software written for the IBM PC in order to provide the performance improvements necessary to achieve their primary goal of high quality graphics.

To achieve maximum acceptance, a peripheral designed for an existing computer system should be transparent to the user

- 3 -

during normal operation, and yet provide increased capability. With the limitations of the prior art techniques for achieving compatibility, substantially increased performance has not been possible.

As a result, there has been a need for an interface between a host and a peripheral which permits increased performance without foreclosing full hardware and software compatibility by the design limitations of the host.

A related limitation of existing peripherals for personal computers has been that the peripherals have hard-wired interface designs, which requires substantial rework in the event of the design error. This, of course, also limits the ability of the manufacturer to incorporate into the peripheral any additional enhancements. Thus there has been a need for an interface between a host and a peripheral which retains a high level of flexibility in permitting design changes or enhancements to be incorporated without substantial rework.

The present invention improves upon the prior art by providing an intelligent interface, or virtual controller, which is capable of accepting data and commands from the host and interpreting and translating the data and commands into a form acceptable for use by a high performance peripheral. The virtual controller is also capable of synthesizing the signals needed by either the host or the peripheral but which are not supplied by the other device alone.

To achieve compatibility between an otherwise incompatible host and peripheral, the data provided by the host is conditioned and decoded and then stored in a RAM for scanning by both the host and a microprocessor in the virtual controller. The RAM is addressed from a multiplexing arrangement to permit both the host and the microprocessor to

- 4 -

access the RAM data, although contentions between the microprocessor and the host for access to the RAM are resolved by permitting the host to override access requests by the microprocessor.

The virtual controller synthesizes generation of a cursor at the appropriate times based on decisions made by the microprocessor. Similarly, the virtual controller includes a pulse generator for driving the peripheral's actual controller at the appropriate rate.

The virtual controller is capable of recognizing and permitting the peripheral to ignore certain commands from the host. One example of such a command used by the IBM PC with a color/graphics adapter is a signal which turns the video display off for short periods when the host is writing to the display. This signal is required by the IBM PC because of a design limitation which would otherwise cause erroneous data to appear, but results in an annoying flashing of the display. By improved display memory design including the use of interleaving, the host may access the display memory without writing bad data to the display, thus eliminating the need to turn off the video display. The virtual controller of the present invention thus permits the actual peripheral controller to ignore the host signal, which permits a higher performance than would otherwise be possible with a conventional interface.

In addition, the virtual controller of the present invention is capable of monitoring the signals received from the host and determining the type of video adapter which is installed in the host, and adapting the operation of the controller to that host configuration.

The virtual controller also has the ability to be reprogrammed to provide for many types of corrections or enhancements without the need for extensive physical rework.

- 5 -

It is therefore one object of the present invention to provide an improved microprogrammable interface which eliminates many of the shortcomings of the prior art.

It is another object of the present invention to provide a method for programmably interfacing a host system to an otherwise incompatible peripheral subsystem.

It is a further object of the present invention to provide an improved interface between electronic subsystems capable of synthesizing signals to provide for compatibility of a host subsystem with a higher performance peripheral subsystem.

These and other objects of the present invention will be better understood from the following Detailed Description of the Invention read in light of the attached Figures, in which

Figure 1 shows in block diagram form the interface of the present invention in combination with the subsystems which require the interface for compatibility.

Figure 2 shows the relationship between Figures 2a and 2b.

Figures 2a-2c show in a high level block diagram form an exemplary arrangement of the virtual controller.

Figure 3 shows the relationship between Figures 3a-3c.

Figures 3a-3c show in detailed schematic block diagram form the virtual controller of the present invention.

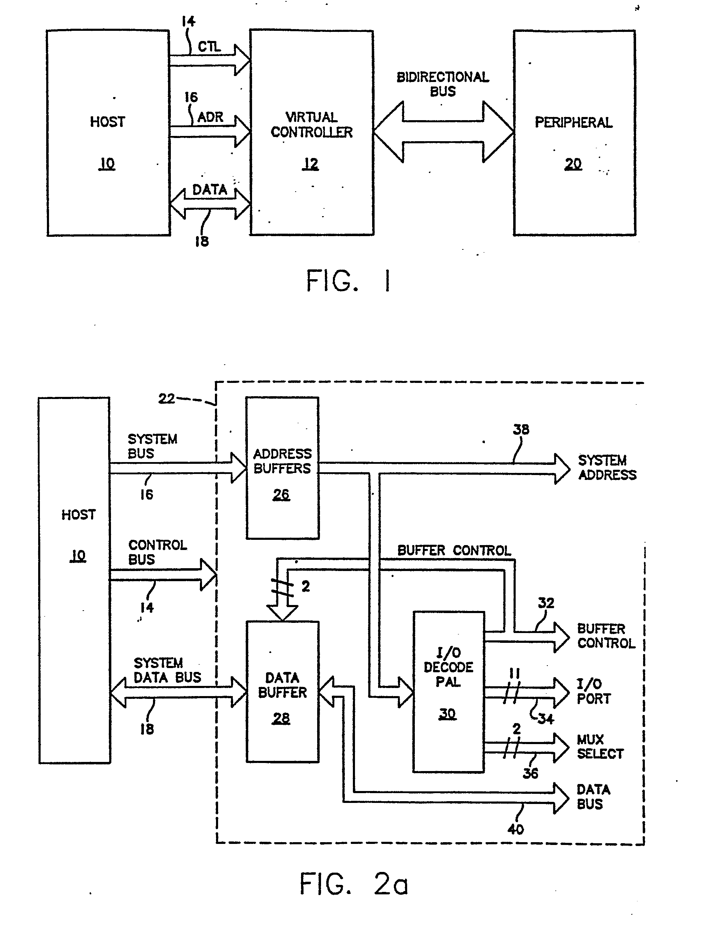

With reference to Figure 1, a system is shown comprising a host 10 which communicates with the virtual controller or interface 12 of the present invention by means of three buses 14, 16 and 18, which may for example be control, address and data buses and some or all of which may be bidirectional. The virtual controller 12 in turn communicates with a controlled peripheral 20 through a plurality of buses. The virtual controller initially conditions and decodes the information from the host and then manipulates that data in the manner

- 6 -

required to achieve operational compatibility between the host 10 and the peripheral 20. In an exemplary embodiment, the host may be a microcomputer such as an IBM PC and the peripheral may be a high resolution graphics monitor such as offered by Wyse Technology. Typically, the peripheral 20 will include an internal controller, which may for the exemplary arrangement described here be a CRT controller such as a 6845 chip offered by Motorola. The present invention and related logic replaces a monochrome card or a color graphics adapter or both, and also permits the use of a higher performance graphics display. Alternatively, the peripheral 20 can be a disk drive, a printer, a keyboard, a network interface or other subsystem, in which case the IBM PC may be required to include appropriate other features.

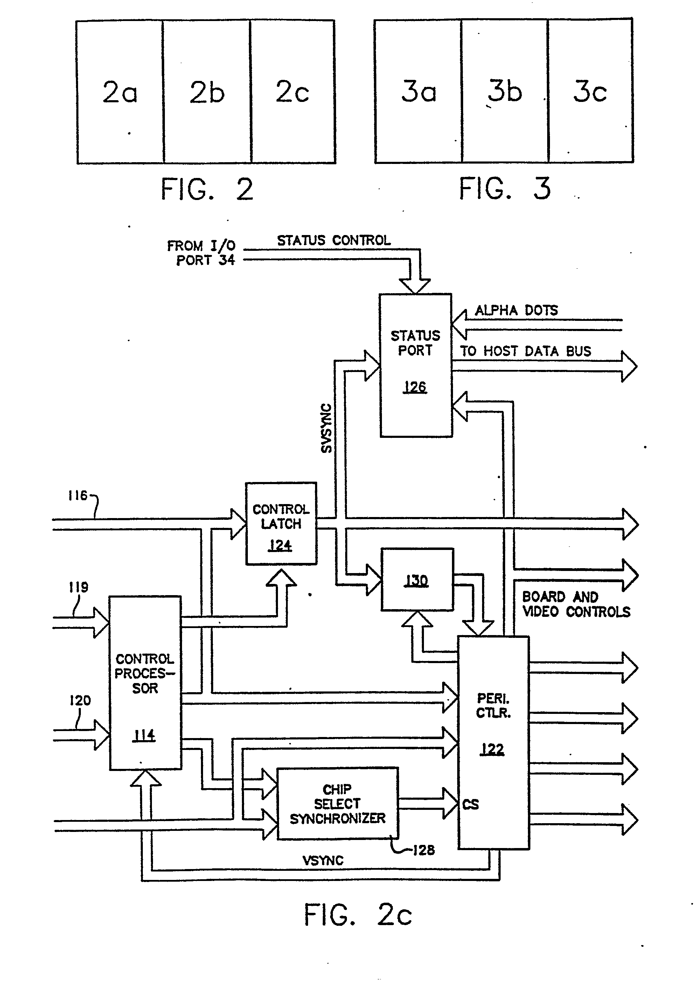

Referring now to Figures 2a-2b, and particularly Figure 2a, the functional operation of the conditioning and decoding, or I/O decode, portion 22 of the virtual controller 12 may be understood. The host 10 communicates with the virtual controller 12, shown in dashed block form, through a control bus 14, an address bus 16 and a data bus 18. The I/O decode logic 22 conditions the address signals received from the host 10 by means of address buffer 26 and conditions the data signals in the data buffer 28, which prevents undue loading of the outputs from the host.

The address signals from the host are then decoded in an I/O decode PAL 30 to provide the signals necessary for a buffer control bus 32, an I/O port bus 34 and a mux select bus 36. The conditioned system address is also provided to the remainder of the interface by means of a system address bus 38, and the conditioned data is provided via a data bus 40. The buffer control bus 32 also feeds a signal back to the data buffer 28 to ensure appropriate bidirectional communication of data with the host 10. The operation of the I/O decode PAL 30 will be apparent to those skilled in the art given the teachings herein.

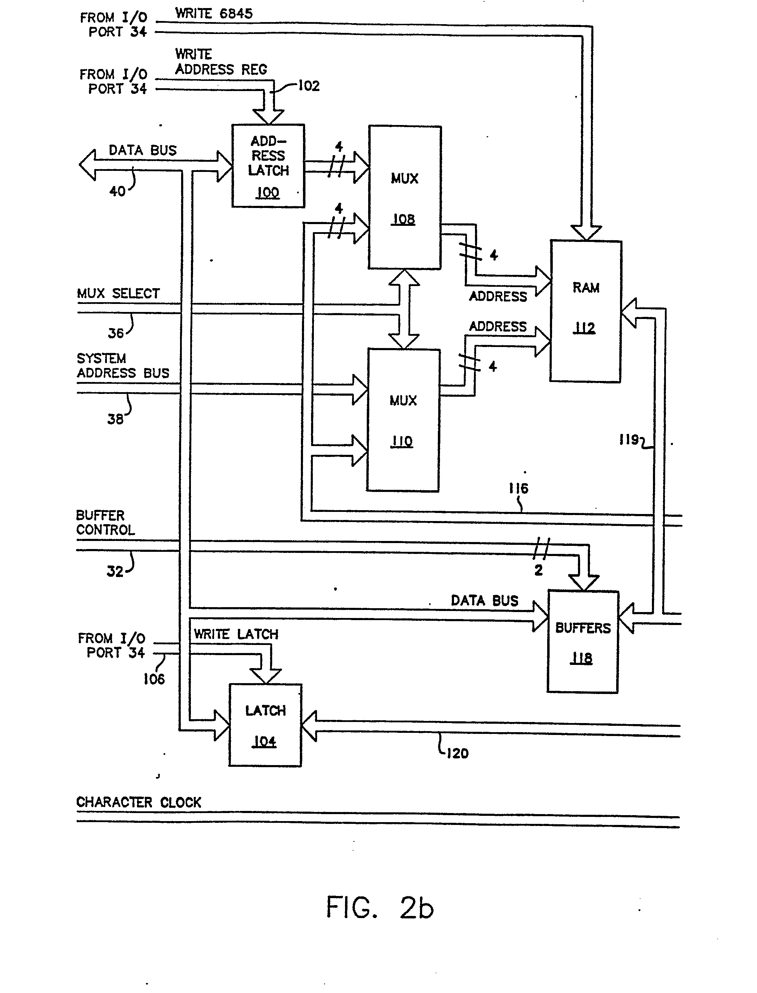

With reference now to Figures 2a-2c and particularly Figures 2b-2c, the operation of the remainder of the virtual controller 12, shown in schematic block diagram form, may be understood. The data bus 40 provides data from the host via the I/O decode logic 22 and supplies it to an address latch 100. The address latch 100 is controlled by a "WR ADD REG" line 102 which forms part of the I/O port bus 34. The data bus 40 also supplies the data to a latch 104, which is controlled by a "WR WY" line 106 which forms a portion of the I/O port bus 34. The latch 104 permits the virtual controller to perform special functions when used with PC-type hosts which offer a superset of the functions provided by the IBM PC; one example of such other hosts are the Wyse PCs offered by the assignee of the present invention. During operation with conventional systems such as the IBM PC, the output of the latch 104 will be inactive.

The data from the addess latch 100 is supplied to a mux 108. Similarly, the host address information is supplied to a mux 110 via the address bus 38. The multiplexers 108 and 110 are jointly controlled by the mux select bus 36, which selects the manner by which the two multiplexers will provide their respective outputs to a RAM 112. The RAM 112 stores the operating parameters supplied by the host 10 and serves to emulate the register set for the controller with which the host 10 is expecting to communicate, which would normally be the controller internal to the peripheral 20. This arrangement also serves to isolate the actual controller from the host 10.

The remaining inputs to the muxes 108 and 110 are provided by the outputs PB0-PB7 of a control processor 114 through a control bus 116. Thus, depending on the state of the mux select lines 36, the RAM may be addressed by either the host 10 (through intermediate logic) or the control processor 114. However, the control processor 114 is not permitted to write to the RAM 112, whereas the host 10 may both read from and write to the RAM 112.

Thus, the host 10, which would in conventional designs communicate directly with the controller, instead communicates only with the RAM 112. In addition, the RAM 112 emulates most of the PC output ports found on the monochrome card and the color graphics adapter, and when an input or output to these ports occurs, a control line (part of the mux select bus 36) is strobed to permit the data to pass to or from, respectively, the RAM 112, which is preferably a static RAM but could be any of several types of storage devices and may be sized on the order of 2k bytes. This process allows the control processor 114 to determine what mode the virtual controller should be in simply by accessing RAM 112 and, among other things, determining whether the host expects a monochrome card or a CGA.

Data is provided to the RAM 112 from the data bus 40 through a buffer 118 by means of an internal data bus 119. The internal data bus 119 permits data flow bidirectionally between the buffer 118 and the RAM 112, and also permits data from the RAM 112 to be read by the control processor 114. This isolates the host 10 from the internal data bus 119, while at the same time permitting the host to write to or read from the RAM, and permitting the control processor to read from the RAM. This permits the control processor 114 to continuously poll the contents of the RAM 112 without interfering with any other RAM read/write operations performed by the virtual controller as may be requested by the host 10.

The output of the control processor 114 is also supplied to a control latch 124, which functions simply to latch certain control signals from the processor into a known state for use by the virtual controller 12 and the peripheral 20. The control latch functions to provide several signals to the peripheral 20, including: CLK/2 ENABLE, which is used in 40 column text mode; ALPHA ENABLE, which turns on the text dot stream for a monitor; MEDIUM RES, which is included in the selection among various resolutions; CURSOR BIT, which selects which of a character pair in memory is a cursor; ENABLE DISPLAY, for display blanking; FONT, which selects between a plurality of available character fonts; MONO, which permits the underline attribute to be used in the text mode; and SVSYNC, which is a synthesized VSYNC signal generated by the control processor 114 and supplied to the status port 126 to permit the host 10 to operate at a speed lower than that at which the peripheral is actually operating.

The VSYNC signal, initially supplied by the color graphics adapter of the host as a timing signal, occurs at a frequency dependent on the timing of the monitor but for the IBM device occurs at 60 Hertz. However, because of the faster operation of some monitors such as the high resolution graphics monitor offered by Wyse Technology, the VSYNC signal would appear at a faster rate than preferred for the host. As a result, the virtual controller presents the synthesized VSYNC signal described above, with the time taken for the control processor 114 to execute a continuous background loop described hereinafter in greater detail. The timing for execution of the background loop is calibrated by the control processor from the real VSYNC signal, so that SVSYNC is accurate within acceptable limits. An interrupt to the control processor 114 is generated whenever a real VSYNC signal is received from the peripheral controller, which interrupt causes the VSYNC signal to be provided to the host at the same frequency, if appropriate, and also causes the timing of the background loop to be calibrated.

A status port 126 receives board status inputs from the control latch 124 and provides that status information back to the host data bus, internal to the host 10, for communication to the host. The status port 126 also receives inputs from the peripheral controller 122. For implementations involving the IBM PC and the choice of either a monochrome card or a color graphics adapter, the status port 126 emulates the status port of the selected monochrome card or color graphics adapter.

Among other functions, a key purpose of the control processor 114, which may for example be a 6805 microprocessor as offered by a number of semiconductor manufacturers including Motorola, is to translate the values written to the RAM 112 into the correct values necessary to control the desired peripheral. If, as has been assumed in this example, the peripheral is a video display device such as a monitor, the control processor 114 will supply the translated parameters in a typical arrangement to a video controller 122, which may for example be a 6845 CRT controller together with ancillary logic. Of course, in other implementations of the present invention the controller 122 need not be a video controller but could instead be network interface, a printer controller, a disk controller or any other input/output device. In at least some circumstances, the controller 122 could be an otherwise incompatible terminal, such that the virtual controller of the present invention provides terminal emulation.

It will be appreciated by those skilled in the art that the requirements of a 6845 CRT controller operating in conjunction with a high resolution graphics monitor are such that the internal timing registers of the 6845, among other things, conflict with the timing associated with the IBM PC that the two subsystems are effectively incompatible without special interfaces such as the present invention.

The translation function performed by the control processor 114 includes programming into the controller 122 the values necessary for operation with the particular peripheral together with setting the necessary control signals for the remainder of the virtual controller. To accomplish the programming of the controller 122, the processor 114 monitors the mode selected by the host and, based on that information, either calculates the necessary values or uses its internal look-up tables. The values necessary to operation of a 6845 CRT controller will be apparent to those skilled in the art. The processor 114 uses a similar method to generate the control signals necessary for the operation of the virtual controller as a whole.

In some instances, including the exemplary embodiment of the present invention, the cycle time of the processor 114 will be too slow for satisfactory performance of the peripheral 20. In such embodiments, a pulse generator 128 may be provided to synchronize and decrease strobe period and thereby interface properly to the controller 122. In addition, a cursor generator 130 driven by the control latch 124 and the character clock CCLK (from the peripheral controller 122) may be provided to generate a cursor at appropriate times.

With Figures 1 and 2a-2c in mind, the operation of the virtual controller 12 in combination with the exemplary host and peripheral described previously can be understood.

When the host 10 is powered up, the virtual controller is also powered up and goes into an initializing mode. During the initializing mode the processor 114 initializes its internal RAM and its ports, and sets up certain subroutines stored in its memory. At the same time, the processor 114 disables the peripheral 20 so that no artifacts appear on the display.

The control processor 114 forms an initial check-sum from a selected group of registers within the RAM 112, reflecting the random values associated with power up. When the host has finished its internal initialization, it begins to write to the external RAM, including the RAM 112. This causes the check-sum of the registers to change, which serves as a signal to the virtual controller 12 to program the peripheral controller 122 appropriate to the values desired by the host. Once the checksum changes, the peripheral is enabled by the controller 12 to permit a display if requested by the host. At this point the system has reached normal operation.

During normal operation the virtual controller 12 continuously loops through a preset sequence. That sequence begins with an examination of the RAM 112 to determine whether the host is sending a command. If a command has been sent by the host, the command is executed. The sequence continues by checking to determine the mode of operation to determine whether IBM PC compatibility is desired, or high performance operation is requested.

Next, the RAM 112 is read and decoded to permit programming of the CRT controller 122 and other control values within the virtual controller 12. The sequence then updates the timing counters of the peripheral controller 122 as necessary, and generates a synthetic VSYNC signal if required. Finally, the sequence causes the processor 114 to check its internal RAM and restart.

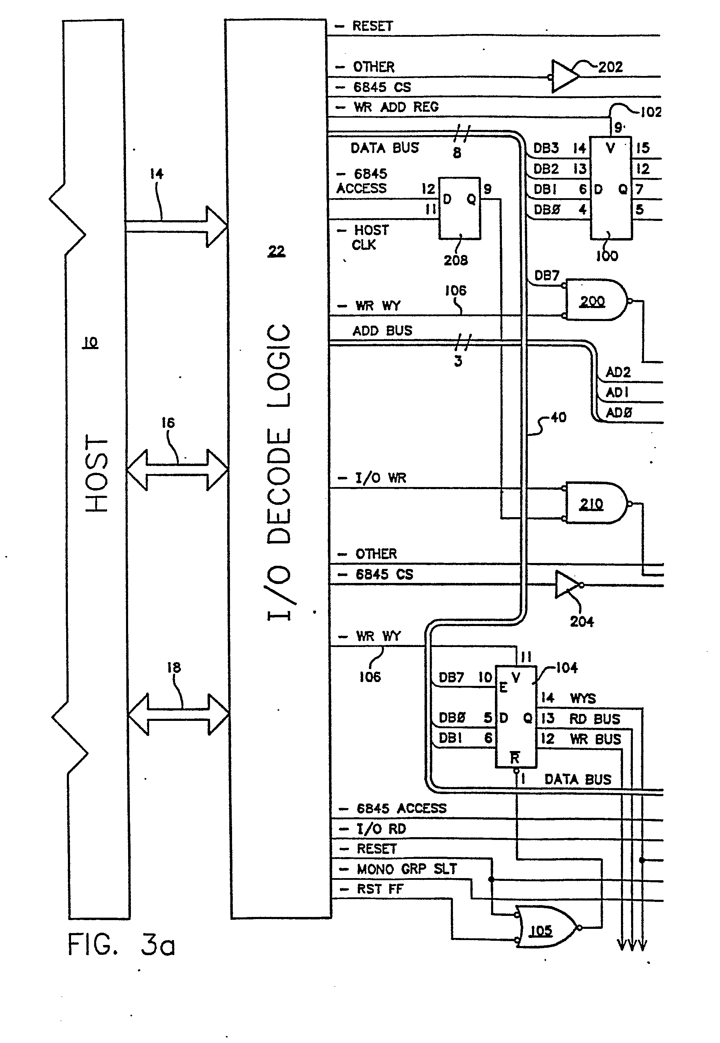

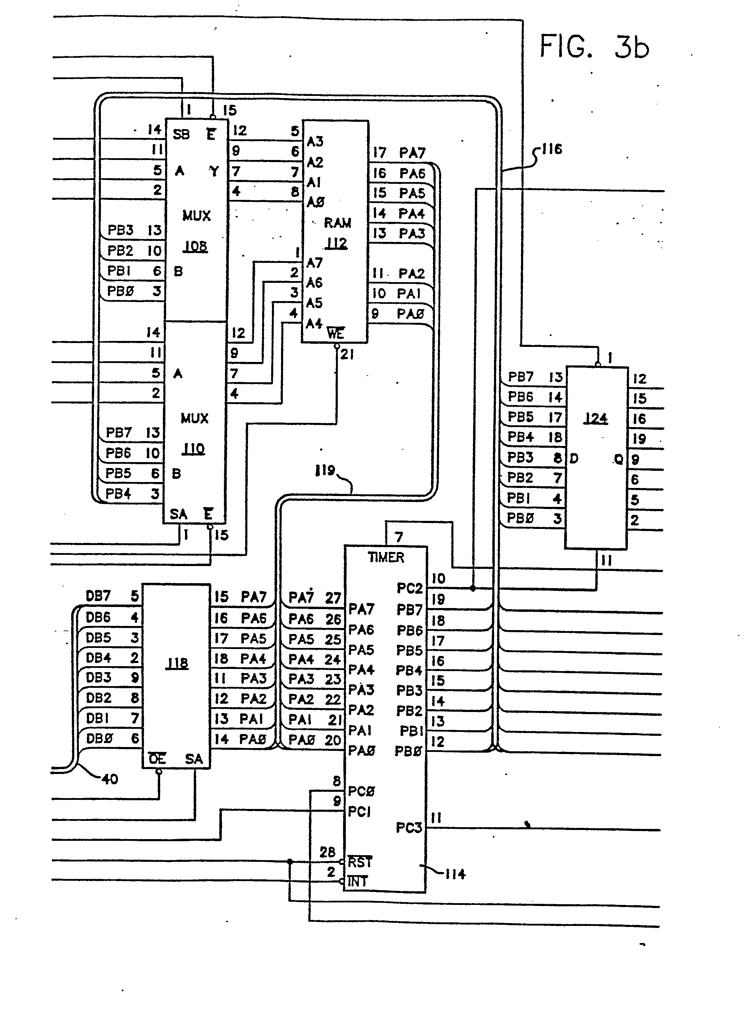

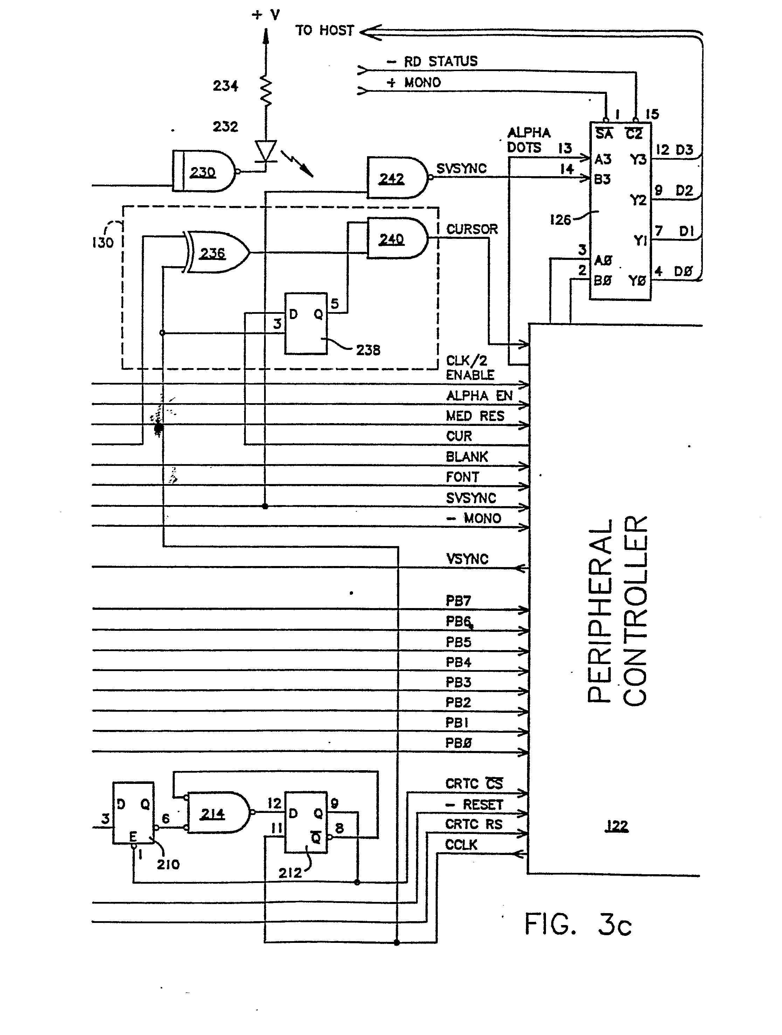

Referring now to Figures 3a, 3b and 3c, the relationship between which can be seen from Figure 3, the virtual controller of Figures 2a-b can be understood in great detail. The host 10, I/O decode logic 22 and peripheral controller 122 again appear in the same relationship to the virtual controller 12. However, in Figures 3a-3c, the buses between the I/O decode logic 22 and the virtual controller 12 have been reduced to their components, as have the buses between the virtual controller and the peripheral controller.

As can be seen from particularly Figure 3a, the data bus 40 provides data bits DB0 through DB3 to the address latch 100, and the WR ADD REG line 102 controls the latching of the information in accordance with instructions from the host. The data bus also provides data bits DB1, DB0 and DB7 to the latch 104, and provides all eight data bits to the buffer 118. The latch 104 is controlled by an AND gate 105 which receives from the I/O decode logic the lines RESET and RST FF, which form part of the I/O control bus 34. Similarly, the line WR WY 106 which forms part of the I/O port bus 34 provides a control signal to the latch 104. The AND gate 105 functions to reset the port latch 104 at power up and also at each access to the IBM monochrome card or color graphics adapter, so the virtual controller will adapt to system mode changes automatically.

The data bus 40 also supplies bit 7 to one input of an OR gate 200, the other input of which is supplied by the WR WY line 106. The OR gate 200 functions to alter the address to the RAM 112 depending on whether the information received from the host is a command or data. The output of the gate 200 provides one input to the mux 110, together with three address bits 0 to 2 of the address bus 38. Four corresponding inputs, carrying program bits PB4 to PB7, to the mux 110 are provided from the control processor 114 by means of the program bus 116.

In a similar fashion, the output of the address latch 100 provides four data inputs to the mux 108. The muxes 108 and 110 are controlled by the lines 6845 CS and OTHER, which can be seen to form the mux select bus 36. The OTHER line is inverted by inverter 202 for control of the mux 108, and similarly the 6845 CS line is inverted by inverter 204 for control of the mux 110. The OTHER line is activated whenever the PC output ports are addressed so that the RAM 112 can properly emulate the PC output ports, as previously described.

The outputs of the muxes 108 and 110 are supplied to the RAM 112 as discussed in connection with Figures 2a-2c, and a control signal is provided to the WRITE ENABLE pin of the RAM 112 from a D flip flop 208 through an OR gate 210. The clock input to the flip flop 208 is provided by the HOST clock from the host, and the remaining input to the OR gate 210 is provided by the I/O WR line from the I/O decode logic 22. The function of the OR gate 210 is to decode the write strobe for the RAM 112. The flip flop 208 synchronizes the timing of the host I/O strobe to that of the RAM 112.

In the event of a contention between the host 10 and the control processor 114 to the RAM 112, the arbitration sequence included in the virtual controller requires that the host be given access to the RAM whenever requested. This creates the problem for the control processor 114 of ensuring that the data it has read from the RAM has not changed; this is resolved by requiring that the RAM data be identical for three read cycles by the control processor 114 before the control processor is permitted to act on the RAM data.

The buffer 118, which receives data from the host and both provides data to and receives data from the RAM 112, is controlled by the 6845 ACCESS line and the I/O RD line into the OE-not and SA pins, respectively, and otherwise operates as described in connection with Figures 2a-2c.

During normal operation of the control processor 114, the control program of the processor 114 described previously causes the processor 114 to perform a scan loop to determine the values of the RAM 112 and to facilitate performance of any commands from the host 10. As such, the outputs of the processor 114 are provided back to the muxes 108 and 110 in the manner previously described, but are also supplied to a controller 122, which forms part of the peripheral 20. The program bus 116 also supplies eight bits to the control latch 124.

The chip select synchronizer 128 includes a pair of D flip flops 210 and 212 with an OR gate 214 connected between the Q-bar output of the flip flop 210 and the D input to the flip flop 212. The remaining input to the OR gate 214 is provided by the Q-bar output of the flip flop 212. The Q output of the flip flop 212 provides an enable input to the flip flop 210. The purpose of the synchronizer 128 is, as described in connection with Figures 2a-2c, to generate a sufficiently high frequency timing pulse where required by the peripheral 20.

In some instances, a status indicator is useful, in which case the LED driver 230, LED 232, and resistor 234 may be provided, with the resistor connected to the voltage supply. In the exemplary embodiment disclosed here, the LED 232 may be caused to flash at a slow rate when the virtual controller is functioning properly, and to flash at a different rate to indicate an error condition.

For some applications, a cursor signal will need to be generated at appropriate times. To accomplish this, a cursor generating circuit comprising EXCLUSIVE OR gate 236, flip flop 238 and AND gate 240 are provided.

An inverter 242 may be provided if necessary for the SVSYNC line.

It can be appreciated that the outputs of the virtual controller 12 to the peripheral 20, and particularly to the peripheral 122, will be as shown in Figure 3c, and will particularly include processor bits PB0-PB7 and the lines discussed in connection with the control latch 124.

It will be appreciated that numerous variations and equivalents which do not depart from the present invention will be apparent to those skilled in the art given the teachings herein. The scope of the present invention is therefore not intended to be limited by the foregoing detailed description of an exemplary embodiment, but rather is limited only by the following claims.

CLAIMS

1. A method for providing compatibility between otherwise incompatible first and second subsystems of an electronics system comprising the steps of

storing parameters provided by a first subsystem and indicative of an expected mode of operation,

scanning the stored parameters and identifying those necessary for operation of a second subsystem,

selectively converting the identified parameters into values compatible with the second subsystem,

providing the converted values to the second subsystem, and

providing to the first subsystem values as expected by the first subsystem for the expected mode of operation.

2. A virtual controller for providing compatibility between otherwise incompatible first and second subsystems of an electronics system comprising

a storage means for receiving a first set of parameters provided by the first subsystem and indicative of an expected mode of operation for a second subsystem,

conversion means including a microprocessor for identifying and converting selected ones of said first set of parameters to values different from those supplied by the first subsystem and required for actual operation of the second subsystem, and

port means for supplying to the first subsystem indicia representative of the operation of the second subsystem but in a form acceptable to the first subsystem.

FIG. I

FIG. 2a

0229700

1/6

FIG. 2b

0229700

| | | |
|:-:|:-:|:-:|
| 2a | 2b | 2c |

FIG. 2

| | | |
|:-:|:-:|:-:|
| 3a | 3b | 3c |

FIG. 3

FROM I/O PORT 34 — STATUS CONTROL

ALPHA DOTS

STATUS PORT
126

TO HOST DATA BUS

SVSYNC

116

CONTROL LATCH
124

130

119

CONTROL PROCESSOR
114

PERI. CTLR.
122

120

CHIP SELECT SYNCHRONIZER

CS

128

VSYNC

BOARD AND VIDEO CONTROLS

FIG. 2c

FIG. 3a

0229700

FIG. 3b

FIG. 3c